# EUROPÄISCHE PATENTSCHRIFT

(11) **EP 0 433 567 B1**
(45) Veröffentlichungstag und Bekanntmachung des Hinweises auf die Patenterteilung: **04.08.1993**
(21) Anmeldenummer: 90117992.9
(22) Anmeldetag: 19.09.1990
(51) Int. Cl.: B60H 1/00

(54) **Konvektor zur Raumheizung eines Grossraumfahrzeuges**
Convector for internal heating of a large-volume vehicle
Radiateur à convection pour chauffer un véhicule de grand volume

(30) Priorität: 18.12.1989 DE 3941697
(43) Veröffentlichungstag der Anmeldung: 26.06.1991
(73) Patentinhaber: MERCEDES-BENZ AG, 70327 Stuttgart (DE)
(72) Erfinder: Schanzer, Hans-Peter, W-7120 Bietigheim-Bissingen (DE); Kalt, Hans-Peter, W-7036 Schönaich (DE); Lüders, Michael, W-7046 Gäufelden (DE); Straub, Reinhard, W-7347 Bad Überkingen (DE)

(56) Entgegenhaltungen:
- DE-A- 3 345 855
- US-A- 1 853 477

## Beschreibung

Die Erfindung betrifft einen Konvektor zur Raumheizung eines Großraumfahrzeuges, insbesondere Omnibus, bestehend aus auf mindestens einem wärmeträgerdurchflossenen Rohr aufgereihten Lamellen, die von einem Gehäuse umschlossen sind, wobei beiderseits des Rohres ein Raum geschaffen wird, von denen einer bis auf Luftübertrittsöffnungen gegenüber dem Rohr abgeschottet ist und der andere Raum oberseitig Luftauslaßöffnungen aufweist, die mit einem seitlichen Versatz zum Rohr hin versehen sind.

Eine derartige Heizeinrichtung, bei der der eine Raum Frischluft führt, die durch die Luftübertrittsöffnungen, aufgeheizt durch die Lamellen, zum anderen Raum gelangt und dann durch die oberseitigen Luftaustrittsöffnungen nach außen geleitet wird, ist durch die DE-C-11 24 840 bekannt. Die ausströmende Luft heizt unter dem Fahrzeugboden sich befindende Hohlräume zur Schaffung einer Fußbodenheizung auf und strömt dann hinter einer Wandverkleidung nach oben, um dann durch unterhalb von Fenstern angeordnete Ausblasgitter in den Innenraum auszutreten. Der seitliche Versatz der Luftauslaßöffnungen gegenüber dem Rohr gewährleistet, daß bei einem etwaigen Staub- und Fremdkörpereintritt durch die Luftauslaßöffnungen die Gefahr der Beaufschlagung des Rohres durch solche Verunreinigung wesentlich reduziert ist, so daß die Gefahr einer unangenehmen Geruchsentwicklung insbesondere zu Beginn einer Aufheizphase kaum mehr gegeben ist.

Es ist Aufgabe der Erfindung, eine große Heizleistung aufweisende Konvektorheizung zu schaffen, bei der selbst bei massiv auftretendem Staub- und Fremdkörpereintritt durch die oberseitigen Lufteinlaßöffnungen eine Anlagerung solcher Schadstoffe insbesondere auf der Rohroberseite mit Sicherheit vermieden wird, so daß selbst bei hohen Vorlauftemperaturen und vorhergehender langer Stillstandszeit der Heizung keine Geruchsbelästigung auftritt.

Diese Aufgabe wird bei einem Konvektor zur Raumheizung nach der im Oberbegriff des Anspruches 1 angegebenen Art durch die kennzeichnenden Merkmale dieses Anspruches gelöst.

Die Wärmeabgabe und damit die Heizleistung wird verbessert, wenn eine äußere Wand des Konvektors dem Fahrgastraum und die gegenüberliegende Wand der Seitenwand des Omnibusses zugekehrt ist, wobei die seitenwandnahe Wand einen Abstand zur Seitenwand aufweist und die als Fußauflage dienende Abdeckung parallel zur Seitenwand verlaufend hochgezogen ist und im hochgezogenen Bereich mit Luftauslässen versehen ist.

Ein Ausführungsbeispiel der Erfindung wird nachfolgend anhand der Zeichnung näher erläutert. Es zeigt:
- Fig. 1: einen Schnitt durch einen vereinfacht wiedergegebenen Seitenwandbereich eines Omnibusses im Bereich einer Säule mit einem eingehängten Konvektor und
- Fig. 2: eine perspektivische Draufsicht auf zwei aufeinanderfolgende Lamellen im Durchtrittsbereich des oberen, wasserführenden Rohres.

Von einem unteren Längsträger 1 eines nicht näher dargestellten Omnibusses ragt eine aufrecht stehende Säule 2 ab, an die sich in ihrem unteren Bereich ein Säulenabschnitt 3 anschließt. Nach außen hin ist der Säule 2 eine Beplankung 4 mit Abstand vorgelagert, wobei der Freiraum 5 mit einem Isolierstoff 6 angefüllt ist. Mit dem Säulenabschnitt 3 verbunden ist ein hochragender Abschnitt 7 eines Podestbodens 8, der in nicht näher dargestellter Weise die Bestuhlung aufnimmt. Von dieser ist lediglich die wandnahe untere Eckkontur eines Sitzkissens 10 angedeutet.

Vom Abschnitt 7 des Podestbodens 8 ragt ein Flansch 11 ab, an dem mit Abstand voneinander angeordnete Träger 12 befestigt sind, die ihrerseits das untere Ende 13 einer Tragwand 14 für einen Konvektor 15 aufnehmen. Oberseitig ist die Tragwand 14 abschnittsweise in Halteflansche 16 eingehängt, die jeweils mit der Säule 2 verbunden sind.

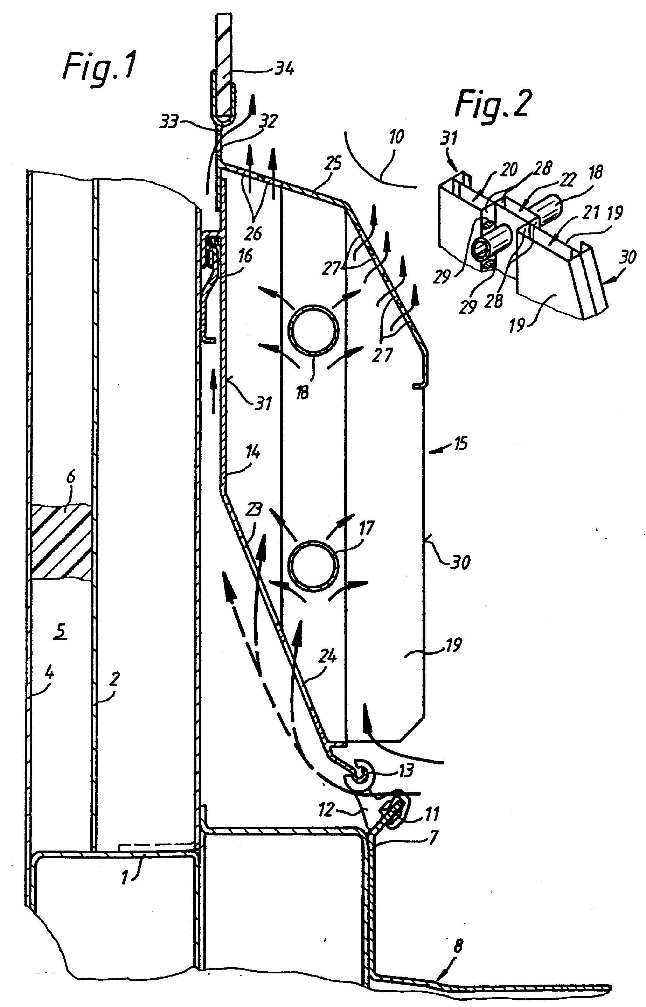

Den Konvektor 15 durchziehen zwei an einen Wärmeträgerkreislauf, z.B. dem Motorkühlkreislauf einer nicht dargestellten Brennkraftmaschine angeschlossene Rohre 17 und 18, auf denen Lamellen 19 aufgereiht sind, wie dies insbesondere aus Fig. 2 hervorgeht. Zwei aufeinanderfolgende Lamellen 19 trennen durch ihre abgekanteten Wandabschnitte zwei äußere Räume 20 und 21 sowie einen von den Rohren 17 und 18 durchzogenen Schacht 22 voneinander ab. Sowohl die Räume 20 und 21 als auch die Schächte 22 sind unterseitig offen, wobei im zugeordneten Abschnitt der Tragwand 14 durch entsprechend plazierte Durchbrüche 23 und 24 ein Luftzutritt ermöglicht wird.

Oberseitig sind die Lamellen 19 mit einer Abdeckung 25 (Fig. 1) versehen, die dem zugeordnet sitzenden Fahrgast im Bedarfsfall als Fußstütze dient. Damit warme Luft aus den rohrfreien Räumen 20 und 21 nach oben hin entweichen kann, sind Luftauslaßöffnungen 26 und 27 in der Abdeckung 25 vorgesehen. Die Schächte 22 sind oben durch die Abdeckung 25 verschlossen, damit eine oberseitige Staubanlagerung an den Rohren 17 und 18, die im Heizbetrieb zu Geruchsbelästigungen führen würde, vermieden wird. In die Räume 20 und 21 insbesondere im Abstützungsfall der Schuhe gelangender Staub und Fremdkörper können unterseitig ungehindert austreten. Damit auch in den Schächten 22 ein Luftaustausch erfolgen kann, sind im Bereich der Rohre 17 und 18 in den Wänden 28 zu den angrenzenden Räumen 20 und 21 hin Luftübertrittsöffnungen 29 eingelassen, wie dies bei einer Wand 28 in Fig. 2 ersichtlich ist.

Durch die aufeinanderfolgenden abgekanteten äußeren Schmalseiten der Lamellen 19 werden weitestgehend ebenflächige äußere Wände 30 und 31 geschaffen, wobei die Wand 30 dem Fahrgastraum und die Wand 31 der Seitenwand zugekehrt ist. Die Wand 31 und auch die Tragwand 14 weisen einen Abstand zur Karosserie auf, so daß eine Hinterströmung möglich ist, wobei ein oberseitiger Luftaustritt durch Luftauslässe 32 zum Fahrgastraum hin erfolgt, die in einem hochgezogenen Bereich 33 der Abdeckung 25, der gleichzeitig zur Aufnahme einer Seitenwandverkleidung 34 dient, eingelassen sind. Es stellt sich somit insgesamt eine Luftströmung ein, wie sie in Fig. 1 mit Pfeilen angedeutet ist. Ein freier Luftzutritt erfolgt dabei in säulenabschnittsfreien und trägerfreien Bereichen, während sich die Hinterströmung in Abschnitten ausbildet, in denen keine obere Einhängung der Tragwand 14 stattfindet.

## Patentansprüche

1. Konvektor (15) zur Raumheizung eines Großraumfahrzeuges, insbesondere Omnibus, bestehend aus auf mindestens einem wärmeträgerdurchflossenen Rohr aufgereihten Lamellen (19), die von einem Gehäuse umschlossen sind, wobei beiderseits des Rohres ein Raum (20,21) geschaffen wird, von denen einer bis auf Luftübertrittsöffnungen gegenüber dem Rohr abgeschottet ist und der andere Raum oberseitig Luftauslaßöffnungen (26,27) aufweist, die mit einem seitlichen Versatz zum Rohr hin versehen sind,
**dadurch gekennzeichnet,**
daß die Wände der einander gegenüberliegenden Räume (20, 21) von abgekanteten Wandabschnitten der aufeinanderfolgenden Lamellen (19) gebildet werden, daß jede so geschaffene Reihe von Räumen (20, 21) unterseitig offen und oberseitig mit einer den Räumen (20, 21) zugekehrte Luftaustrittsöffnungen (26, 27) aufweisenden Abdeckung (25) versehen ist, und daß das Rohr (17, 18) hintereinander angeordnete, unten offene und oben durch die Abdeckung (25) verschlossene Schächte (22) durchzieht, deren beide den angrenzenden Räumen (20, 21) zugeordnete Wände (28) mit Luftaustrittsöffnungen (29) ausgestattet sind.

2. Konvektor nach Anspruch 1,
**dadurch gekennzeichnet,**
daß eine äußere Wand (30) des Konvektors (15) dem Fahrgastraum und die gegenüberliegende Wand (31) der Seitenwand des Omnibusses zugekehrt ist, daß die seitenwandnahe Wand (31) einen Abstand zur Seitenwand aufweist, und daß die als Fußauflage dienende Abdeckung (15) parallel zur Seitenwand verlaufend hochgezogen ist und im hochgezogenen Bereich (33) mit Luftauslässen (32) versehen ist.

## Claims

1. A convector (15) for space heating in a large capacity vehicle, particularly a motor bus, consisting of plates (19) arranged on at least one pipe through which a heat carrier flows and which are enclosed by a housing, a space (20, 21) being provided on both sides of the pipe, one of the said spaces being screened from the pipe except for air transfer apertures while the other space has at the top air outlet orifices (26, 27) which are laterally offset in relation to the pipe, characterised in that the walls of the mutually opposite spaces (20, 21) are formed by angled-over wall portions of the successive plates (19) and in that each row of spaces (20, 21) which are thus formed is open on the under side and provided at the top with a covering (25) in which there are air outlet orifices (26, 27) facing the spaces (20, 21) and in that the pipe (17, 18) is traversed by serially disposed shafts (22) which are open at the bottom and closed at the top by the covering (25) and of which the two walls (28) associated with the adjacent spaces (20, 21) are provided with air outlet orifices (29).

2. A convector according to claim 1, characterised in that an outer wall (30) of the convector (15) faces the passenger compartment while the opposite wall (31) faces the side wall of the motor but and in that the wall (31) which is close to the side wall is at a distance from the side wall and in that the covering (15) which serves as a base support is raised to extend parallel with the side wall, the raised portion (33) being provided with air outlets (32).

## Revendications

1. Convecteur (15) pour chauffer l'espace d'un véhicule de grand volume, en particulier d'un autobus, constitué de lamelles (19) qui sont enfilées sur au moins un tube parcouru par un fluide caloporteur et qui sont entourées par une enceinte, convecteur dans le cas duquel, des deux côtés du tube, est créé un espace (20, 21) dont l'un est rendu étanche par rapport au tube, à l'exception des ouvertures de passage de l'air, et dont l'autre espace possède, sur sa face supérieure, des ouvertures (26, 27) de sortie de l'air qui présentent un déport latéral par rapport au tube,
convecteur caractérisé
par le fait que les parois des espaces (20, 21) situés en face l'un de l'autre sont formées de portions de paroi, à bords rabattus, des lamelles successives (19), par le fait que chaque série d'espaces (20, 21) ainsi créée comporte un recouvrement (25) ouvert par-dessous et présentant, par-dessus, des ouvertures (26, 27) de sortie de l'air orientées vers les espaces (20, 21) et par le fait que le tube (17, 18) traverse des puits (22) qui sont disposés l'un derrière l'autre, sont ouverts en bas et obturés, en haut, par le revêtement (25) et dont les deux parois (28) correspondant aux espaces (20, 21) qui les jouxtent présentent des ouvertures (29) de sortie de l'air.

2. Convecteur selon la revendication 1,
caractérisé
par le fait qu'une paroi extérieure (30) du convecteur (15) est orientée vers l'espace des passagers et que la paroi (31) située en face est orientée vers la paroi latérale de l'autobus, par le fait que la paroi (31) proche de la paroi latérale de l'autobus se trouve à une certaine distance de cette paroi latérale et par le fait que le revêtement (15), qui sert d'appuie-pieds se relève en s'orientant parallèlement à la paroi latérale de l'autobus et présente des sorties de l'air (32) dans la zone relevée (33).
